# EUROPEAN PATENT APPLICATION

(11) **EP 1 638 248 A1**
(43) Date of publication of application: **22.03.2006**
(21) Application number: 05002532.9
(22) Date of filing: 07.02.2005
(51) Int. Cl.: H04L 12/18

(54) **Multicast service with transmission of time of information update**

(30) Priority: 16.09.2004 JP 2004270365
(71) Applicant: FUJITSU LIMITED, Kawasaki-shi, Kanagawa 211-8588 (JP)
(72) Inventor: Wang, Tingting c/o Fujitsu Limited, Kawasaki-shi Kanagawa 211-8588 (JP); Sugiyama, Katsumasa c/o Fujitsu Limited, Kawasaki-shi Kanagawa 211-8588 (JP); Koizumi, Yoshiko c/o Fujitsu Limited, Kawasaki-shi Kanagawa 211-8588 (JP)
(74) Representative: Körfer, Thomas

(57) **Abstract**

To provide a system capable of preventing UE from receiving the same data (duplicate data) as data already received and to provide each of devices used for this system. A terminal device receives update timing information indicating timing when data (e.g., data of an MBMS service) is updated and transmitted, stops, based on the update timing information, a receiving process till the updated data is transmitted, and resumes the receiving process in synchronization with the timing of transmitting the updated data.

## Description

### BACKGROUND OF THE INVENTION

The present invention relates to a technology applied to a multicasting system, a multicasting device, a multicasting method and a multicasting program in communications for providing a service to a plurality of user terminal from single service provider.

In multicasting in mobile communications, the same data that is not updated is transmitted plural number of times. Hence, UE (User Equipment: user terminal) receives the same data plural number of times. In other words, the UE dually receives the same data. The UE was, however, unable to judge whether the received data is data that was already received in the past (i.e., unnecessary data: duplicate data) or a fresh piece of data updated (i.e., necessary data: updated data).

The following technologies are given to solve this problem. For example, UMTS (Universal Mobile Telecommunications System) solves this problem in the following manner. The UMTS is one of the third generation mobile communication systems. In the UMTS, notifying information repeatedly transmitted to the in-cell UE contains a flag (Value tag) indicating whether a content of the notifying information is updated or not. The UE is capable of judging based on a value in this flag whether or not the received notifying information is notifying information that was already received in the past (i.e., whether the received information is duplicate data or not) (refer to Non-Patent document 1).

Further, CBS (Cell Broadcast Service) is adopted in GSM (Global System for Mobile Communications) as one of the second generation mobile communication systems and in the UMTS. In the CBS, the service data repeatedly transmitted to the in-cell UE has a data number (serial number). The UE can judge based on this number whether or not the received data is the data already received in the past (i.e. , whether the received data is the duplicate data or not) (refer to Non-Patent document 2) .

Moreover, there is a device having a purpose that a receiver for receiving a broadcast such as a digital audio broadcast, etc. , can simply quickly select a program having a program identifier or a program category, which was received in the past. This device, if a component ID of the received program is not recorded in a memory, records a component name and a component ID of this program as frequencies in the memory. On the other hand, this device, if the component ID of the received program is recorded in the memory, and if the component name of the received program is the same as the component name recorded in the memory, adds "1" to the frequencies of the same component name and the same component ID of the received program. Moreover, this device, if the component ID of the received program is recorded in the memory, and if the component name of the received program is different from the component name recorded in the memory, rewrites the component name recorded in the memory into the component name of the received program, and adds "1" to the frequency thereof. Then, this device displays the component names in the sequence of the frequencies from the highest when selecting the program (refer to Patent document 1) .

### [Patent document 1]

Japanese Patent Application Laid-Open Publication No.2002-261637

### [Non-Patent document 1]

3GPP TS25.331 Radio Resource Control (RRC) protocol v.3.18.0(2004-03)

### [Non-Patent document 2]

3GPP TS23.041 Technical realization of cell broadcast service(CBS) v.3.5.0(2002-06)

### SUMMARY OF THE INVENTION

In any technology described above, however, the UE has no alternative but to receive the duplicate data. In other words, the UE, if not after receiving the duplicate data, could not judge whether the data is the duplicate dataornot. Itwas therefore impossible to avoid the receipt of the duplicate data.

By the way, as the wireless transmission technologies have been developed, it is predicted that a multimedia broadcast/multicast service (MBMS: Multimedia Broadcast Multicast Service) in the mobile communications will spread from now into the future. In the MBMS, there often occurs such a condition that the content data having the same content are repeatedly transmitted. Its is not, however, preferable to the UE already receiving the content data that the duplicate data is received plural number of times because of futility being caused in consumption of electric power needed for receiving. In particular, this problem becomes more serious to the UR receiving the plurality of MBMSs.

Accordingly, it is an object of the present invention to provide a system capable of preventing the UE from receiving the same data (duplicate data) as data already received and to provide each of devices used for this system.

The present invention takes the following constructions in order to solve the problems. A first aspect of the present invention is a network system including a data transmitting device and a terminal device. The data transmitting device includes a data transmitting unit and an update timing information transmitting unit. The data transmitting unit multicasts data to an unspecified or specified terminal device. The update timing information transmitting unit multicasts update timing information to the unspecified or specified terminal device. The update timing information is information that indicates timing when the data transmitting unit transmits the data updated. The update timing information, in the case of such a scheme that, for example, the terminal device periodically executes a receiving process, may be a value representing the number of cycles of this receiving process. Further, the update timing information may also be a value representing absolute time.

The terminal device includes a data receiving unit, an update timing information receiving unit, a judging unit and a receipt instructing unit. The data receiving unit receives the data from the data transmitting device. The update timing information receiving unit receives the update timing information from the data transmitting device. The judging unit judges the receipt timing when the data receiving unit should receive the data next, based on the update timing information. The receipt instructing unit instructs the data receiving unit to stop and/or start receiving the data in accordance with a result of the judgment made by the judging unit. For example, the receipt instructing unit may be constructed to give the instruction to receive the data till the timing judged by the judging unit is reached and to start receiving the data at a point of this timing.

According to the first aspect of the present invention having this construction, the terminal device can judge the timing when the received data is updated next and transmitted, and also can receive the data in synchronization with this timing. Therefore, the terminal device can prevent the dual receipt of the same data that is not updated from the data transmitting unit. Accordingly, it is possible to save the time required for the receiving process, and resources and electric power consumed on the terminal device. Further, the user has no necessity of checking the dually received data, thereby improving the usability.

A second aspect of the present invention is a network system including a data transmitting device and a terminal device. The data transmitting device includes a data transmitting unit, a control signal transmitting unit and an adding unit. The data transmitting unit multicast data to an unspecified or specified terminal device. The control signal transmitting unit multicasts a control signal to an unspecified or specified terminal device. The control signal is a signal needed for the terminal device to receive the data transmitted from the data transmitting unit. The adding unit adds the update timing information to the control signal or the data. The update timing information is information that indicates timing when the data transmitting unit transmits the data updated.

The terminal device includes a data receiving unit, a control signal receiving unit, a judging unit and a receipt instructing unit. The data receiving unit receives the data from the data transmitting device. The control signal receiving unit receives the control signal from the data transmitting device. The judging unit judges the receipt timing when the data receiving unit should receive the data next, based on the update timing information contained in the received control signal. The receipt instructing unit instructs the control signal receiving unit and the data receiving unit to stop and/or start the receipt in accordance with a result of the judgment made by the judging unit.

According to the second aspect of the present invention, it is possible to acquire the same operations and the same effects as those in the first aspect of the present invention.

Further, the receipt instructing unit in the second aspect of the present invention may be constructed to instruct the data receiving unit and the control signal receiving unit to stop the receipt till the receipt timing is reached, and to instruct the data receiving unit and the control signal receiving unit to start the receipt at the receipt timing. In this case, the data receiving unit is constructed to receive the data based on the control signal received by the control signal receiving unit.

The first aspect and the second aspect may be actualized in such a way that a program is executed by the information processing device. Namely, the present invention can be specified as a program for making the information processing device execute the processes executed by the respective unit in the first aspect and in the second aspect, or as a storage medium stored with the program. Moreover, the present invention may also be specified as a method by which the information processing device executes the processes executed by the respective unit.

According to the present invention, the terminal device makes it possible to prevent the dual receipt of the same data that is not updated from the data transmitting device.

### DESCRIPTION OF THE DRAWINGS

FIG.1 is a view showing an example of an architecture of a network system;
FIG . 2 is a view showing an example of functional blocks of an RNC;
FIG . 3 is a flowchart showing an example of an operation flow of the RNC;
FIG . 4 is a table showing a specific example of update timing information;
FIG. 5 is a view showing an example of functional blocks of UE;
FIG. 6 is a flowchart showing an example of an operation flow of the UE; and
FIG.7 is a view showing a processing flow in the network system.

### DETAILED DESCRIPTION OF THE INVENTION

To start with, a network system 1 as a specific embodiment of a network system according to the present invention will be described. The network system 1 is a network designed based on UMTS. The network system 1 is, however, an example of the network system according to the present invention. Hence, the network system according to the present invention may also be designed based on other mobile communication systems.

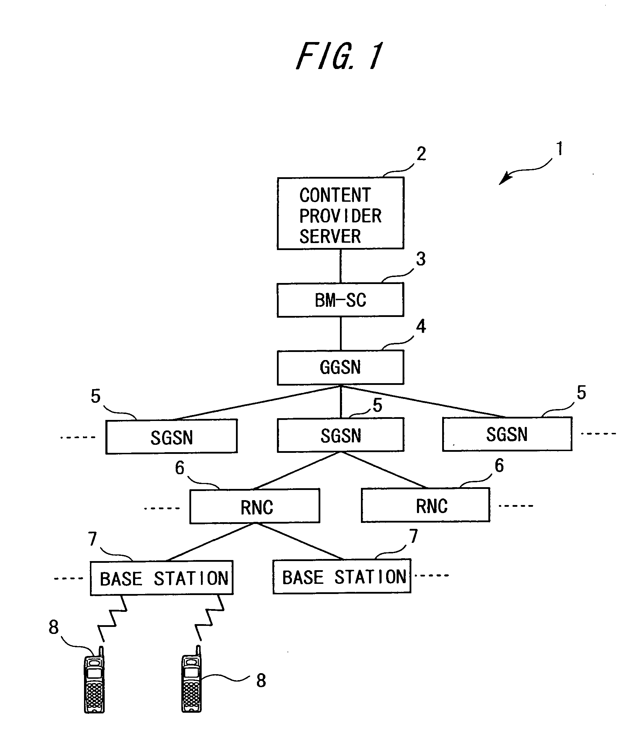

FIG. 1 is a view showing an example of an architecture of the network system 1 according to the present invention. The network system 1 includes a content provider server 2, a BM-SC (Broadcast Multicast Service Center) 3, a GGSN (Gateway GPRS (General Packet Radio Service) Support Node : Packet Gateway Node) 4, an SGSN (Serving GPRS Support Node : Packet Access Control Node) 5, an RNC (Radio Network Controller : Wireless Network Control Device) 6, a base station 7 , and UE8ₒ Data of the MBMS service provided from the content provider server 2 are provided to the UE8 via the BM-SC 3, the GGSN 4, the SGSN 5, the RNC 6 and the base station 7.

The content provider server 2 is constructed by use of an information processing device (irrespective of a general-purpose and a dedicated type) such as a personal computer, a workstation and so on. The content provider server 2 retains, on a self-mounted storage device, the data of the MBMS service provided to the user via the UE8. Further, the content provider server 2 has pieces of data representing a transmission schedule of each MBMS service and indicating a service area, etc. to be provided.

The BM-SC 3 controls multicasting of the MBMS service. To be specific, the BM-SC 3 receives the information showing the transmission schedule of each MBMS service and the transmission area, etc. from the content provider server 2. Moreover, the BM-SC 3 receives the MBMS service data to be multicast from the content provider server 2. Then, the BM-SC 3 multicasts the MBMS service data on the basis of the data showing the transmission schedule and the transmission area. At this time, the multicasting may be executed as multicasting and may also be executed as broadcasting.

A GGSN4 and an SGSN5 are devices for routing the transmission data. Functions of the GGSN4 and the SGSN5 comply with the architecture of the GPRS defined as an existing technology, and hence their detailed explanations are omitted.

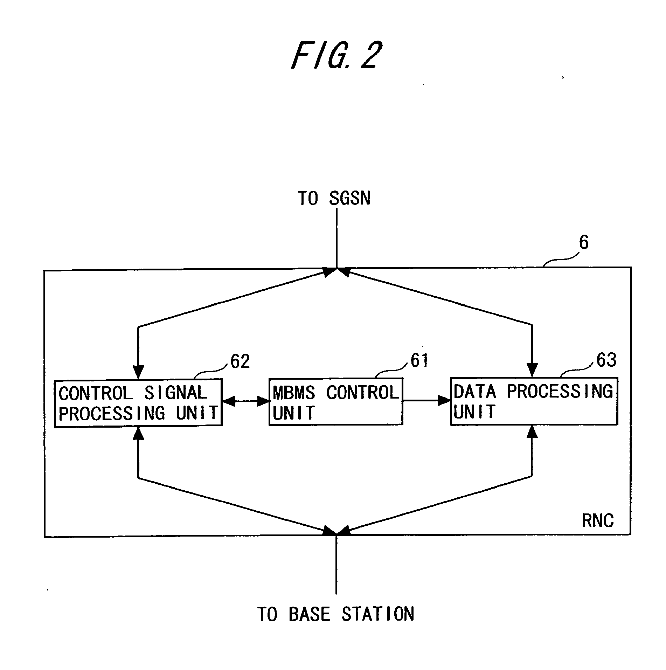

An RNC6 has a wireless protocol function of layers 2 and 3. Further, the RNC6 performs management required for allocating wireless channels by controlling the base station 7. FIG. 2 is a view showing an example of functional blocks of the RNC6. The RNC6 includes an MBMS control unit 61, a control signal processing unit 62 and a data processing unit 63.

The MBMS control unit 61 instructs the control signal processing unit 62 and the data processing unit 63 to handle a MBMS-related control signal and MBMS-related data among pieces of control signals and data inputted from the side of the SGSN5. The control signal processing unit 62 and the data processing unit 63 convert the control signal and the data inputted from the side of the SGSN5 into a format suited to the transmission to the UE8 and transfers those converted t the base station 7. Further, the control signal processing unit 62 and the data processing unit 63, when given an instruction from the MBMS control unit 61, convert the control signal and the data according to this instruction, or generate afresh and transfer the control signal and the data to the base station 7.

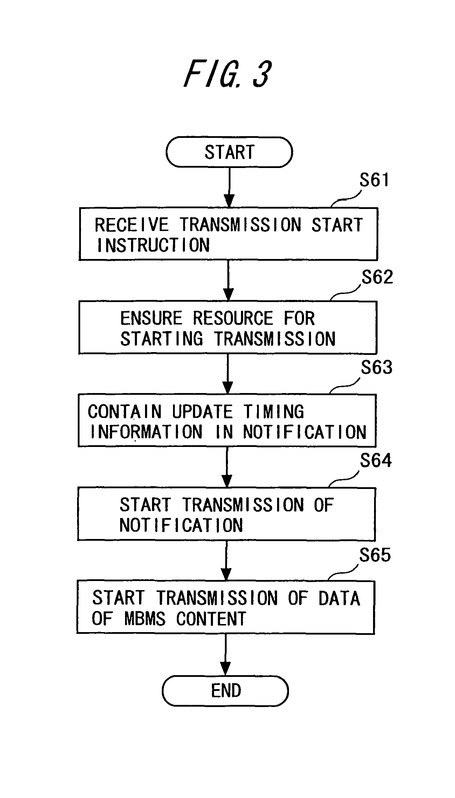

FIG. 3 is a flowchart showing an example of an operation of the RNC6. Next, a processing example of the RNC6 will be explained. When the RNC6 receives a transmission start instruction (Session Start Signal) transmitted from a BM-SC3 (S61), the MBMS control unit 61 instructs the data processing unit 63 to ensure a resource for transmitting the data of the MBMS service corresponding to the transmission start instruction. The data processing unit 63 ensures, based on this instruction, the resource for transmitting the data of the MBMS service (S62) . Next, the MBMS control unit 61 instructs the control signal processing unit 62 to generates a control signal called Notification. Notification contains information needed for the UE8 to receive the data of the MBMS service associated with Notification. At this time, the MBMS control unit 61 gives an instruction to get a piece of update timing information contained inNotification (S63). The update timing information will be described later on. The control signal processing unit 62 starts transmitting Notification generated (S64). Then, after starting the transmission of Notification, the data processing unit 63 starts transmitting the data of the MBMS service (S65) . The transmissions of Notification and the data of the MBMS service may be conducted continuously during a predetermined period of time called "session".

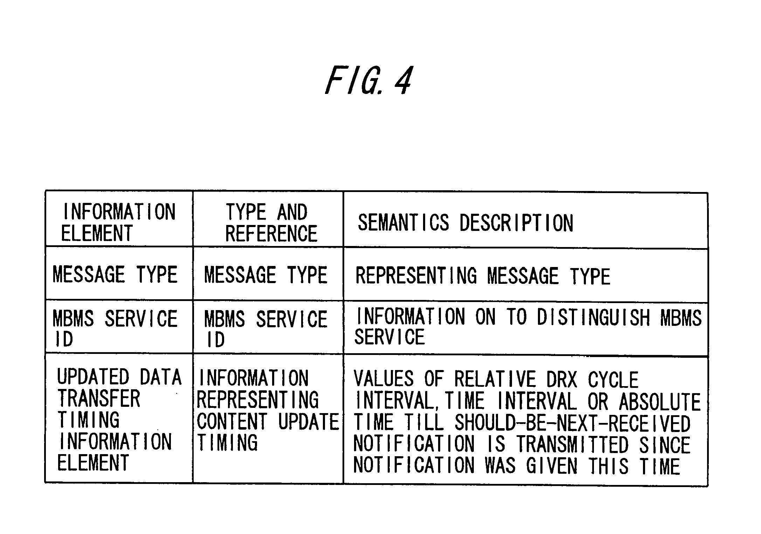

FIG. 4 is a table showing a specific example of the update timing information. The update timing information contains, for example, a message type (Message Type) , an MBMS service ID (MBMS Service ID) and timing information (Updated Data Transfer Timing Information Elements). The message type has a value indicating that this message is a message representing the update timing information. The MBMS ID specifies which MBMS service the following timing information is given about. The timing information has a value that indicates timing when the MBMS service specified by the MBMS service ID is next updated and transmitted. A DRX cycle interval, a time interval or time, etc. are given as specific examples of this value.

The DRX cycle interval indicates a cycle interval at which the UE receives the data of the MBMS service. A value of the DRX cycle may be set for every MBMS service and may also be set per UE8. Accordingly, for example, when this value is set to "3", the UE8 operates as follows. To begin with, the UE8 receives the data of the MBMS service associated with Notification containing this piece of update timing information. Then, the normally-conducted receipt of Notification is halted three times since Notification containing the update timing information was received, and a next receipt of Notification is performed at the timing of the fourth DRX cycle. When the time interval is set, the UE8, the DRX cycle interval being just replaced by the time interval, performs basically the same operation as the above. Further, when the time is set, the UE8, after receiving the data of the MBMS service associated with Notification containing the update timing information, receives next Notification at the set time.

The base station 7 wirelessly transmits, to the UE8 , Notification received from the RNC6, the data of the MBMS service and so on.

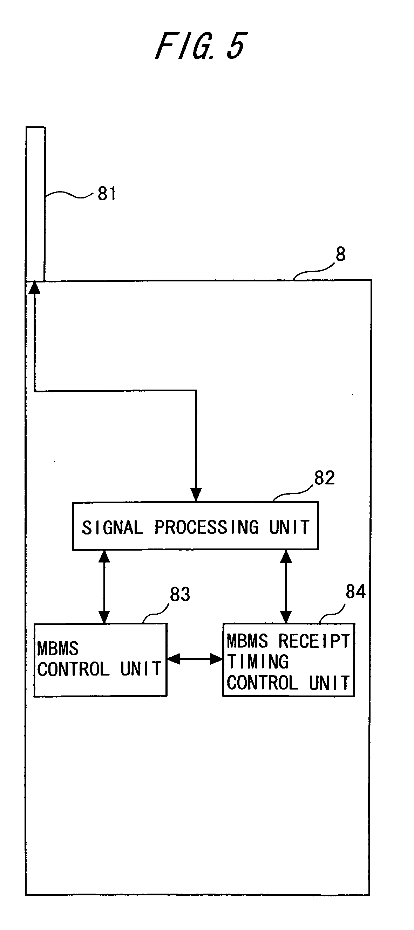

The UE8 is constructed by using a cellular phone, a PDA (Personal Digital Assistant) having a wireless communication function, and so forth. The UE8, when receiving Notification, receives the data of the MBMS service associated with this Notification. Then, the user of the UE8 becomes able to receive the MBMS service via the UE8. FIG. 5 is a view showing an example of functional blocks of the UE8. The UE8 includes an antenna 81, a signal processing unit 82, an MBMS control unit 83 and an MBMS receipt timing control unit 84.

The antenna 81 is constructed by using a conventional antenna device. The signal processing unit 82 extracts the update timing information contained in Notification in data received via the antenna 81, and transfers the extracted information to the MBMS receipt timing control unit 84. Further, the signal control processing unit 82 transfers other pieces of data to the MBMS control unit 83. The MBMS control unit 83, only when receiving a receipt instruction from the MBMS receipt timing control unit 84, receives Notification. Then, the MBMS control unit 83 receives the data of the MBMS service based on Notification received. The MBMS receipt timing control unit 84 stores the received update timing information. Then, the MBMS receipt timing control unit 84 judges, based on the update timing information, the timing when Notification should be received next, and transfers a receipt instruction to the MBMS control unit 83. Note that the MBMS receipt timing control unit 84 may instruct the MBMS control unit 83 to stop the receiving process till the should-receive-Notification timing is reached.

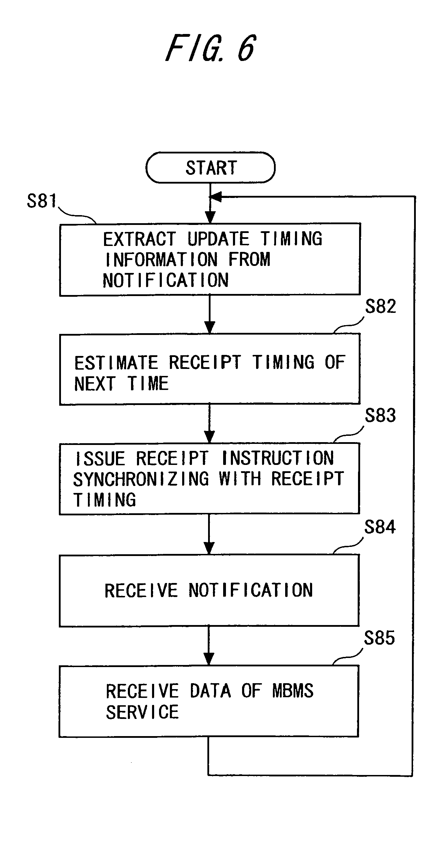

FIG. 6 is a flowchart showing an example of the operation of the UE8. Next, a processing example of the UE8 will be explained with reference to FIG. 6. At first, the signal control processing unit 82 extracts the update timing information from Notification received via the antenna 81 (S81). At this time, the MBMS receipt timing control unit 84 may instruct the MBMS control unit 83 to receive unconditionally first Notification. Further, the MBMS receipt timing control unit 84 may instruct the MBMS control unit 83 to receive Notification on condition that none of the update timing information is stored in the self-unit. Moreover, the MBMS receipt timing control unit 84 may instruct the MBMS control unit 83 to receive Notification on condition that the timing of receiving Notification next time is not yet judged. The signal control processing unit 82 transfers the extracted update timing information to the MBMS receipt timing control unit 84.

The MBMS receipt timing control unit 84 judges, based on the update timing information, the timing when Notification should be received next time, i.e., the timing of transmitting the updated data of the MBMS service next time (S82) . For instance, MBMS receipt timing control unit 84 judges (the timing) based on a value in Update Date Transfer Timing Information Elements contained in the update timing information. Then, the MBMS receipt timing control unit 84 issues a receipt instruction to the MBMS control unit 83 in synchronization with the timing defined as a result of the judgment (S83).

The MBMS control unit 83, upon receiving the receipt instruction from the MBMS receipt timing control unit 84, receive Notification (S84). Then, the MBMS control unit 83 receives the data of the MBMS service associated with Notification received (S85).

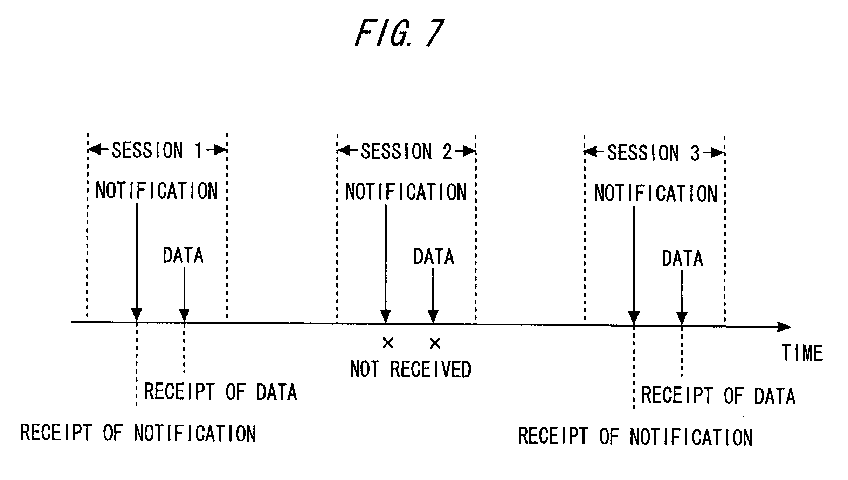

FIG. 7 is a view showing an example of processing flow in the network system 1. Next, in the network system 1, in each of Sessions (Sessions: Sessions 1 - 3 in FIG. 7) , a tuple of Notification and Data (the data of the MBMS service) is sent to the UE8. Specifically, a start of each Session is triggered by the BM-SC3's sending the control signal (the transmission start instruction) indicating a start of Session. The RNC6, when receiving this transmission start instruction, sends Notification associated with this control signal by using an MBMS control channel. Moreover, the RNC6, after sending Notification, transmits Data associated with this Notification by use of a MBMS data channel. Then, the BM-SC3 transmits a control signal indicating an end of Session, and the RNC6 receiving this control signal stops sending Notification and Data, thereby terminating each Session. In each Session, Notification and Data may be transmitted consecutively or may be transmitted intermittently plural number of times. Furthermore, in different Session, the same Notification and the same Data may also be transmitted.

The UE8, upon receiving Notification sent in an unspecified Session (e.g., Session 1), receives Data associated with the received Notification in this Session. The UE8 extracts the update timing information from this Notification, and judges Notification that should be received next. If Notification that should be received next is Notification in Session 3, the UE8 does not receive Notification in Session 2. Therefore, the UE8 does not receive Data in Session 2, either. The UE8 receives Notification in Session 3 at predetermined timing. Then, the UE8 receives Data associated with this Notification in Session 3.

Moreover, the UE8 may also be configured to execute a Join process for receiving a specified MBMS service according to the necessity. In the Join process, the UE8 sends a want-to-subscribe MBMS service ID and a self-device identifier (ID). The device (e.g., BM-SC3) in the network system 1, when receiving these pieces of information, authenticates the UE8. If the UE8 is approved, the BM-SC3 notifies the UE8 of a group identifier (identity) (TMGI: Temporary Mobile Group Identity) of the MBMS service that the UE8 desires to subscribe. Then, the UE8 receives the Data of the MBMS service by use of the TMGI received in this Join process.

In the thus-configured network system 1, the UE8 can judge the should-next-receive timing by use of the update timing information contained in Notification. Namely, it is possible to prevent the UE8 from dually receiving the same data of the MBMS service by using the update timing information. This enables saving of resources required for the receiving process. Further, as a result, a reduction in consumption of the electric power on the UE8 can be attained.

### [Modified Example]

The RNC6 may be constructed to get the update timing information contained not in Notification but in the data of the MBMS service. In this case, the MBMS control unit 6 transfers the update timing information not to the control signal processing unit 62 but to the data processing unit 63. Then, the MBMS control unit 61 instructs the data processing unit 63 to get the update timing information contained in the data of the MBMS service. The data processing unit 63 gets the update timing information contained in the data of the MBMS service. For example, the data processing unit 63 may have the update timing information contained in Inband information in the MBMS service data.

If the RNC6 is constructed as described above, the UE8 is configured to extract the update timing information not from Notification but from the data of the MBMS service. In this case, the signal processing unit 82 extracts the update timing information from the data of the MBMS service, and transfers the update timing information to the MBMS receipt timing control unit 84. For instance, the signal processing unit 82 extracts the update timing information from the Inband information in the MBMS service data.

The network system 1 that is thus configured in the modified version is capable of acquiring the same operations and the same effects as those in the network system described above.

Further, the network system 1 may also be configured so that the UE8 is provided with the data based on s other than for the MBMS service. For example, the RNC6 may be constructed to transmit only the data without sending Notification or a control signal pursuant to this Notification. In this case, as exemplified in the modified example, the data contains the update timing information. Moreover, in this case, the UE8 is constructed to receive the data at the timing obtained based on the update timing information.

## Claims

1. A network system comprising:
a data transmitting device including a data transmitting unit multicasting data to an unspecified or specified terminal device, and update timing information transmitting unit multicasting, to the unspecified or specified terminal device, update timing information defined as information that indicates timing when the data transmitting unit transmits the data updated; and
a terminal device including a data receiving unit receiving the data from the data transmitting device, an update timing information receiving unit receiving the update timing information from the data transmitting device, a judging unit judging the receipt timing when the data receiving unit should receive the data next, based on the update timing information, and a receipt instructing unit instructing the data receiving unit to stop and/or start the receipt of the data in accordance with a result of the judgment made by the judging unit.

2. A network system comprising:
a data transmitting device including a data transmitting unit multicasting data to an unspecified or specified terminal device, a control signal transmitting unit multicasting to the unspecified or specified terminal device a control signal necessary for the terminal device to receive the data transmitted from the data transmitting unit, and an adding unit adding, to the control signal, update timing information defined as information that indicates timing when the data transmitting unit transmits the data updated; and
a terminal device including a data receiving unit receiving the data from the data transmitting device, a control signal receiving unit receiving the control signal from the data transmitting device, a judging unit judging a receipt timing when the data receiving unit should receive the data next, based on the update timing information contained in the received control signal, and a receipt instructing unit instructing the control signal receiving unit and the data receiving unit to stop and/or start the receipt in accordance with a result of the judgment made by the judging unit.

3. A network system according to Claim 2, wherein the receipt instructing unit instructs the data receiving unit and the control signal receiving unit to stop the receipt till the receipt timing, and instructs the data receiving unit and the control signal receiving unit to start the receipt at the receipt timing, and
the data receiving unit receives the data on the basis of the control signal received by the control signal receiving unit.

4. A data transmitting device comprising:
a data transmitting unit multicasting data to an unspecified or specified terminal device; and
an update timing information transmitting unit multicasting, to the unspecified or specified terminal device, update timing information defined as information that indicates timing when the data transmitting unit transmits the data updated.

5. A terminal device comprising:
a data receiving unit receiving a data from a data transmitting device;
an update timing information receiving unit receiving update timing information defined as information that indicates timing when the data updated is transmitted from the data transmitting device;
a judging unit judging the receipt timing when the data receiving unit should receive the data next, based on the update timing information; and
a receipt instructing unit instructing the data receiving unit to stop and/or start the receipt of the data in accordance with a result of the judgment made by the judging unit.

6. A data transmitting device comprising:
a data transmitting unit multicasting data to an unspecified or specified terminal device;
a control signal transmitting unit multicasting to the unspecified or specified terminal device a control signal necessary for the terminal device to receive the data transmitted by the data transmitting unit; and
an adding unit adding, to the control signal, update timing information defined as information that indicates timing when the data transmitting unit transmits the data updated.

7. A terminal device comprising:
a data receiving unit receiving the data from a data transmitting device;
a control signal receiving unit receiving a control signal required for the data receiving unit to receive the data transmitted from the data transmitting device;
a judging unit judging a receipt timing when the data receiving unit should receive the data next, based on update timing information contained in the received control signal and indicating timing when the data transmitting device transmits the data updated; and
a receipt instructing unit instructing the control signal receiving unit and the data receiving unit to stop and/or start the receipt in accordance with a result of the judgment made by the judging unit.

8. A multicasting method comprising:
at a first device, multicasting data to an unspecified or specified second device;
at the first device, multicasting, to the unspecified or specified second device, update timing information defined as information that indicates timing of transmitting data updated;
at the second device, receiving the data from the first device;
at the second device, receiving the update timing information from the first device;
at the second device, judging a receipt timing when the second device should receive the data next, based on the update timing information; and
at the second device, giving an instruction to stop and/or start receiving the data in accordance with a result of the judgment.

9. A multicasting method comprising:
at a first device, multicasting data to an unspecified or specified second device;
at the first device, multicasting, to the second device, a control signal required for the second device to receive the transmitted data;
at the first device, adding, to the control signal, update timing information defined as information that indicates timing of transmitting data updated ;
at the second device, receiving the data from the first device;
at the second device, receiving the control signal from the first device;
at the second device, judging a receipt timing on the basis of the update timing information contained in the received control signal; and
at the second device, giving an instruction to stop and/or start receiving the data and the control signal in accordance with a result of the judgment.
